# FASCICULE DE BREVET EUROPEEN

(11) **EP 4 049 873 B1**
(45) Date de publication et mention de la délivrance du brevet: **24.01.2024**
(21) Numéro de dépôt: 22157569.9
(22) Date de dépôt: 18.02.2022
(51) Int. Cl.: B60K 5/12, B60K 1/00, F16F 1/38

(54) **DISPOSITIF FILTRANT POUR LE SUPPORT D'UN MOTEUR D'UN VÉHICULE AUTOMOBILE**
FILTERVORRICHTUNG FÜR DAS STÜTZGERÜST EINES MOTORS EINES KRAFTFAHRZEUGS
FILTERING DEVICE FOR SUPPORTING AN ENGINE OF A MOTOR VEHICLE

(30) Priorité: 26.02.2021 FR 2101912
(43) Date de publication de la demande: 31.08.2022
(73) Titulaire: ContiTech Vibration Control GmbH, 30165 Hannover (DE)
(72) Inventeur: KERGUELEN, Franck, 31100 TOULOUSE (FR); OGER, Sébastien, 31100 TOULOUSE (FR)
(74) Mandataire: Continental Automotive France

(56) Documents cités:
- EP-A1- 2 985 164
- DE-A1- 19 654 189
- US-A1- 2020 217 391

## Description

### Domaine de l'invention

La présente demande brevet se rapporte à un dispositif filtrant qui est particulièrement adapté pour le support d'un moteur électrique d'un véhicule automobile et pour filtrer les vibrations transmises entre le moteur et la structure du véhicule.

### Etat de la technique

Un véhicule automobile est généralement équipé d'un système de filtration pour absorber des vibrations transmises entre le moteur et la partie structurelle du véhicule, ou châssis.

A cet effet, le système de filtration comporte une pluralité de dispositifs filtrants qui supportent le moteur du véhicule et qui sont interposés entre le moteur et la structure du véhicule.

EP 2 985 164 A1 divulgue un dispositif pour la filtration de vibrations et pour le support d'un moteur d'un véhicule automobile.

Selon un exemple connu, un dispositif filtrant comporte un palier qui est fixé sur le châssis du véhicule automobile et un noyau qui s'étend suivant un axe central et qui est délimité par une face périphérique.

Le noyau est adapté pour relier le dispositif filtrant sur le moteur par une vis centrale par exemple. Aussi, ce type de dispositif comporte une entretoise filtrante qui est interposée radialement entre le noyau et le palier pour filtrer les vibrations émises par le moteur.

Dans ce but, l'entretoise filtrante comporte un élément filtrant qui est réalisé dans un matériau adapté pour absorber les vibrations, comme un élastomère.

Pour permettre le montage et le démontage de l'entretoise sur le noyau, l'entretoise est montée coulissante d'arrière en avant sur le noyau suivant l'axe principal, entre une position initiale démontée et une position finale d'utilisation dans laquelle la première entretoise est montée sur le noyau.

On connaît un dispositif filtrant qui comporte un noyau délimitant, à son extrémité libre, une gorge annulaire qui reçoit un anneau élastique adapté pour verrouiller l'entretoise dans sa position finale d'utilisation en s'opposant au retrait axial de l'entretoise.

### Problème technique restant posé

Un problème constant constaté avec l'utilisation d'un anneau élastique ou d'un élément équivalent pour bloquer axialement l'entretoise, est le temps de montage nécessaire pour monter l'anneau élastique sur le noyau.

De plus, l'anneau élastique est une pièce de faible dimension qui peut être égarée aisément.

Aussi, l'utilisation d'un anneau élastique représente un coût non négligeable.

### Exposé de l'invention

La présente invention a notamment pour but de résoudre ces inconvénients en proposant une alternative à l'utilisation d'un élément rapporté pour verrouiller axialement l'entretoise sur le noyau du dispositif.

On atteint cet objectif, ainsi que d'autres apparaîtront à la lecture de la description qui suit, avec un dispositif pour la filtration de vibrations et pour le support d'un moteur d'un véhicule automobile selon l'objet de la revendication 1. D'autres réalisations possibles font l'objet des revendications dépendantes.

### Brève description des dessins

D'autres caractéristiques et avantages de l'invention ressortiront à la lecture de la description qui suit, en référence aux figures annexées, qui illustrent :
[Fig. 1] : une vue d'ensemble d'un système de filtration qui comporte quatre dispositifs filtrant selon l'invention, supportant un moteur électrique ;
[Fig. 2] : une vue en perspective éclatée axialement du dispositif de la figure 1 ;
[Fig. 3] : une vue en coupe du dispositif filtrant suivant l'axe de coupe 3-3 de la figure 4, selon un premier mode de réalisation de l'invention ;
[Fig. 4] : une vue de côté du dispositif filtrant de la figure 3 ;
[Fig. 5] : une vue de détail en coupe axiale d'un doigt de verrouillage en position de verrouillage dans un logement associé du dispositif de la figure 3 ;
[Fig. 6] : une vue de détail en coupe axiale d'un doigt de verrouillage en position escamotée du dispositif de la figure 3 ;
[Fig. 7] : une vue en coupe du dispositif filtrant suivant l'axe de coupe 3-3 de la figure 4, selon une première variante et une deuxième variante de réalisation de l'invention ;
[Fig. 8] : une vue en perspective avec arrachement du dispositif de la figure 3 selon la deuxième variante de réalisation dans laquelle le noyau délimite une pluralité de logements pour les doigts de verrouillage ;
[Fig. 9] : une vue de détail en coupe radiale du noyau suivant l'axe de coupe 9-9 de la figure 7 ;
[Fig. 10] : une vue en perspective de la bague interne de la première entretoise selon une troisième variante de réalisation du dispositif dans laquelle la bague délimite une pluralité de lumières ;
[Fig. 11] : une vue en coupe axiale de la première entretoise selon la troisième variante de réalisation du dispositif de la figure 10 ;
[Fig. 12] : une vue en coupe du dispositif selon un second mode de réalisation du dispositif dans lequel il comporte deux entretoises en vis à vis, selon une première variante du second mode de réalisation ;
[Fig. 13] : une vue en coupe du dispositif selon le second mode de réalisation du dispositif dans lequel les deux entretoises sont opposées, selon une deuxième variante du second mode de réalisation ;
[Fig. 14] : une vue de détail des doigts de verrouillage de la figure 12 ;
[Fig. 15] : une vue de détail d'un doigt de verrouillage de la première entretoise de la figure 13 ;
[Fig. 16] : une vue de détail d'un doigt de verrouillage de la seconde entretoise de la figure 13.

### Description détaillée de modes de réalisation de l'invention

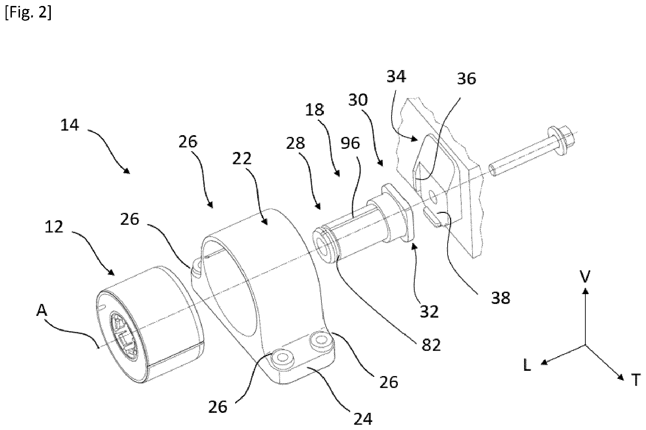

Dans la description et les revendications, on utilisera à titre non limitatif les expressions « avant » et « arrière » en référence à la partie droite et à la partie gauche respectivement de la figure 2.

De plus, pour clarifier la description et les revendications, on adoptera à titre non limitatif la terminologie longitudinal, vertical et transversal en référence au trièdre L, V, T indiqué aux figures.

Sur l'ensemble de ces figures, des références identiques ou analogues représentent des organes ou ensembles d'organes identiques ou analogues.

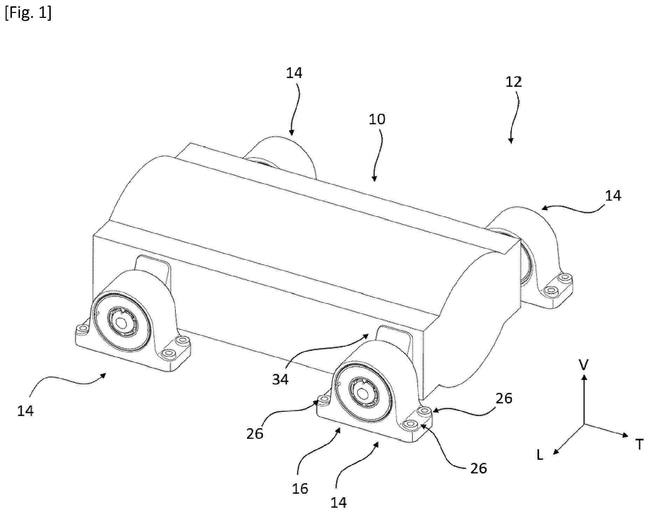

On a représenté à la figure 1 un moteur 10 électrique pour véhicule automobile (non représenté) qui est équipé d'un système 12 pour la filtration des vibrations transmises entre le moteur 10 et la partie structurelle du véhicule, ou châssis (non représenté).

Le système 12 de filtration comprend quatre dispositifs 14 de filtration qui sont chacun adaptés pour absorber des vibrations.

Les quatre dispositifs 14 étant identiques, un seul sera décrit en détails par la suite pour ne pas alourdir inutilement la description.

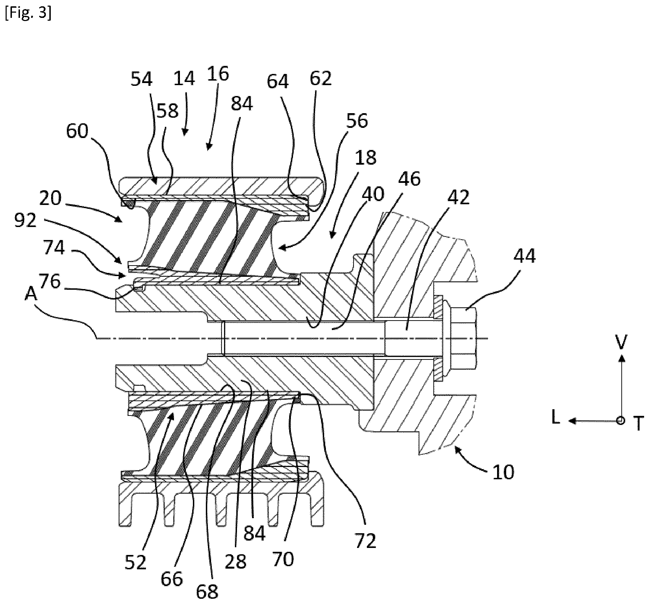

Selon un premier mode de réalisation de l'invention illustré aux figures 1 à 11, le dispositif 14 de filtration comporte un palier 16, un noyau 18 et une première entretoise 20 qui est interposée entre le palier 16 et le noyau 18, comme on peut le voir aux figures 2 et 3.

Le palier 16 est adapté pour fixer le dispositif 14 de filtration sur le châssis du véhicule automobile.

A cet effet, le palier 16 comporte un corps 22 globalement cylindrique qui s'étend axialement suivant un axe A central longitudinal et qui loge la première entretoise 20.

De plus, le palier 16 comprend une semelle 24 qui est solidaire du corps 22 et qui présente quatre trous (non visibles) adaptés chacun pour le passage d'une vis de fixation 26 pour fixer le palier 16 sur le châssis du véhicule.

Le noyau 18 s'étend axialement suivant l'axe A central depuis un tronçon arrière 28 globalement cylindrique qui porte la première entretoise 20, jusqu'à un tronçon avant 30 de fixation.

Le tronçon avant 30 de fixation forme, à son extrémité libre, un socle 32 carré qui coopère avec une platine 34 solidaire du moteur 10.

En référence à la figure 2, la platine 34 du moteur 10 forme une première bordure 36 verticale et une seconde bordure 38 transversale qui coopèrent avec un premier côté et un second côté respectivement du socle 32 du noyau 18, pour assurer la mise en position du noyau 18 par rapport au moteur 10.

De plus, comme on peut le voir à la figure 3, le noyau 18 est traversé axialement suivant l'axe A central par un alésage 40 pour le passage d'une vis 42 de fixation du dispositif 14 de filtration sur le moteur 10.

Selon un exemple de réalisation de l'invention illustré à la figure 3, l'alésage 40 du noyau 18 présente un tronçon taraudé et la vis 42 de fixation s'étend axialement d'avant en arrière depuis une tête 44 qui est en appui axial sur une face interne du moteur 10, jusqu'à un corps fileté 46 qui est vissé sur le tronçon taraudé de l'alésage 40 du noyau 18.

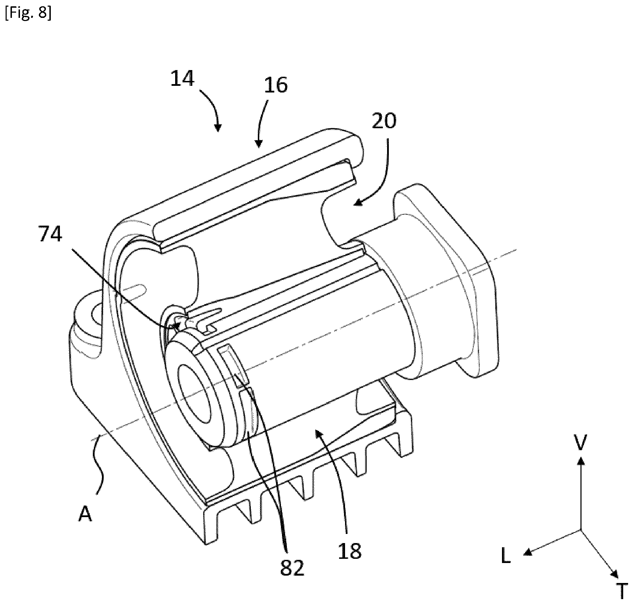

Selon une première variante de réalisation de l'invention illustrée à la figure 8, la vis 42 de fixation s'étend axialement d'arrière en avant depuis sa tête 44 qui est en appui axial sur l'extrémité libre arrière du noyau 18, par l'intermédiaire d'une rondelle 48, jusqu'à son corps fileté 46 qui est vissée dans un trou 50 taraudé ménagé dans le moteur 10.

En référence à la figure 3, la première entretoise 20 comprend une bague interne 52, une bague externe 54 et un élément filtrant 56 qui est interposé radialement entre la bague interne 52 et la bague externe 54 pour filtrer les vibrations.

A cet effet, l'élément filtrant 56 est réalisé en matériau adapté pour absorber les vibrations, par exemple en matériau du type élastomère.

La bague externe 54 présente une forme globalement cylindrique qui s'étend axialement suivant l'axe A central et qui est délimitée radialement par une face externe 58 qui coopère par friction avec un logement complémentaire formé par le palier 16, et par une face interne 60.

Aussi, la bague externe 54 de la première entretoise 20 est délimitée axialement par une face avant 62 radiale qui est en appui axial contre un épaulement 64 formé par le palier 16, de façon à bloquer axialement la première entretoise 20 vers l'avant.

La bague interne 52 présente une forme globalement cylindrique qui s'étend axialement suivant l'axe A central et qui est délimitée radialement par une face externe 66 et par une face interne 68 agencée autour du tronçon arrière 28 du noyau 18.

Pour bloquer axialement la première entretoise 20 vers l'avant, l'extrémité libre avant 70 de la bague interne 52 est en appui axial sur un épaulement 72 formé par le noyau 18.

L'élément filtrant 56 est surmoulé sur la face externe 66 de la bague interne 52 et sur la face interne 60 de la bague externe 54, de sorte que l'élément filtrant 56, la bague externe 54 et la bague interne 52 forment un ensemble solidaire.

De plus, la bague interne 52 de la première entretoise 20 comporte, à son extrémité arrière, une pluralité de doigts de verrouillage 74, qui présentent chacun un ergot 76 formant crochet.

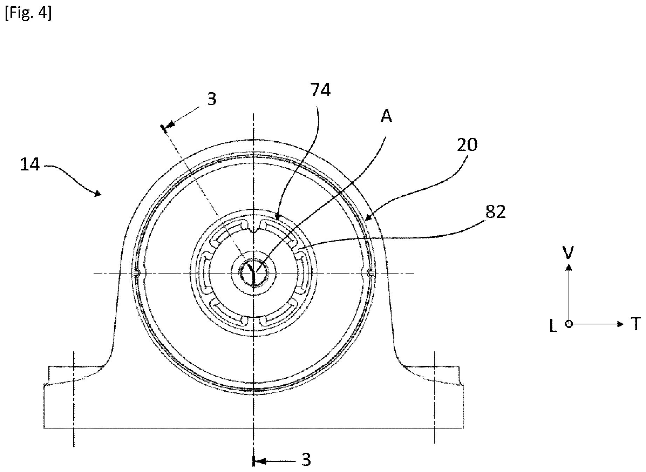

Comme on peut le voir à la figure 4, les doigts de verrouillage 74 sont au nombre de six et ils sont répartis angulairement autour de l'axe A central de façon régulière.

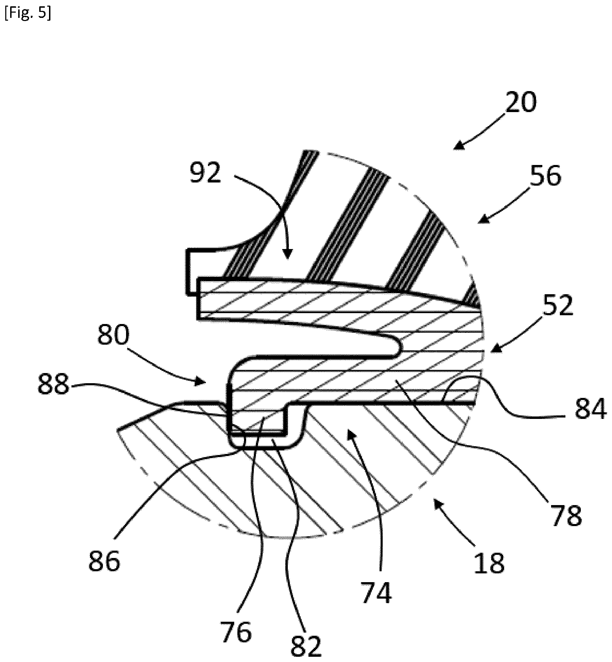

En référence à la figure 5, chaque doigt de verrouillage 74 de la première entretoise 20 s'étend axialement d'avant en arrière depuis un tronçon d'embase 78 relié sur le corps de la bague interne 52, jusqu'à un tronçon d'extrémité libre 80 qui forme l'ergot 76 associé.

Aussi, la première entretoise 20 filtrante est montée coulissante d'arrière en avant sur le noyau 18 suivant l'axe A principal, entre une position initiale démontée illustrée à la figure 2, et une position finale d'utilisation illustrée aux figures 1 et 3 notamment, position finale dans laquelle la première entretoise 20 est verrouillée sur le noyau 18 par les doigts de verrouillage 74.

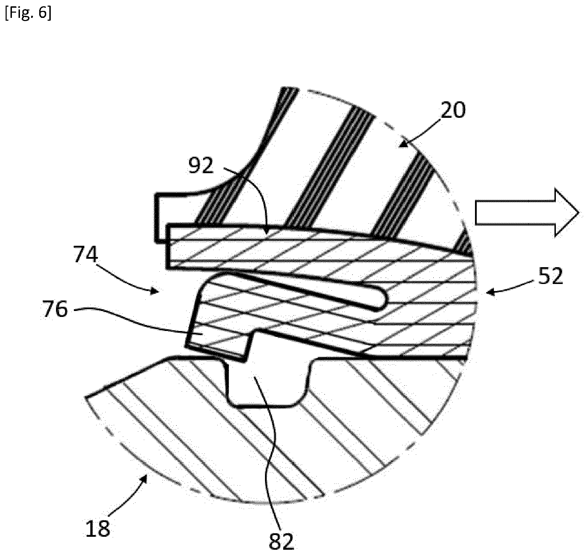

Chaque doigt de verrouillage 74 est déformable élastiquement suivant une direction radiale, entre une position de verrouillage illustrée aux figures 3, 4, et 5, vers laquelle chaque doigt de verrouillage 74 est rappelé élastiquement, et une position escamotée illustrée à la figure 6.

En référence à la figure 6 qui illustre la position escamotée des doigts de verrouillage 74, l'ergot 76 de chaque doigt de verrouillage 74 est dégagé radialement du premier logement 82 associé pour permettre le coulissement axial de la première entretoise 20 sur le noyau 18.

On notera que chaque doigt de verrouillage 74 est contraint dans sa position escamotée par l'ergot 76 associé qui appui sur le noyau 18.

A l'inverse, en référence à la figure 5 qui illustre la position de verrouillage des doigts de verrouillage 74, l'ergot 76 de chaque doigt de verrouillage 74 coopère avec un premier logement 82 associé ménagé dans une face périphérique 84 du noyau 18 pour verrouiller axialement la première entretoise 20 sur le noyau 18.

A cet effet, le premier logement 82 formé par le noyau 18 délimite une face de verrouillage 86 qui s'étend globalement radialement et l'ergot 76 délimite une face d'appui 88 complémentaire qui s'étend globalement radialement et qui est conçue pour être en appui axial sur la face de verrouillage 86 du premier logement 82 associé.

On notera que chaque doigt de verrouillage 74 de la première entretoise 20 s'oppose au coulissement axial de l'entretoise 20 vers l'arrière en travaillant en compression, ce qui offre une meilleure tenue aux efforts qu'un travail en traction.

En référence aux figures 2 et 3, le premier logement 82 formé par le noyau 18 présente la forme d'une gorge annulaire qui s'étend autour de l'axe A central.

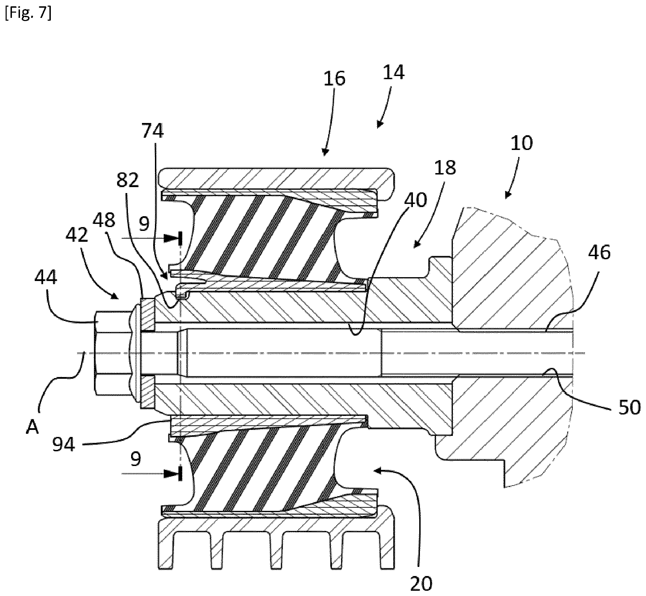

A titre non limitatif, selon une deuxième variante de réalisation de l'invention illustrée aux figures 7 à 9, le noyau 18 délimite six premiers logements 82 qui sont associés chacun à un des doigts de verrouillage 74 et qui sont agencés angulairement autour de l'axe A central de façon régulière.

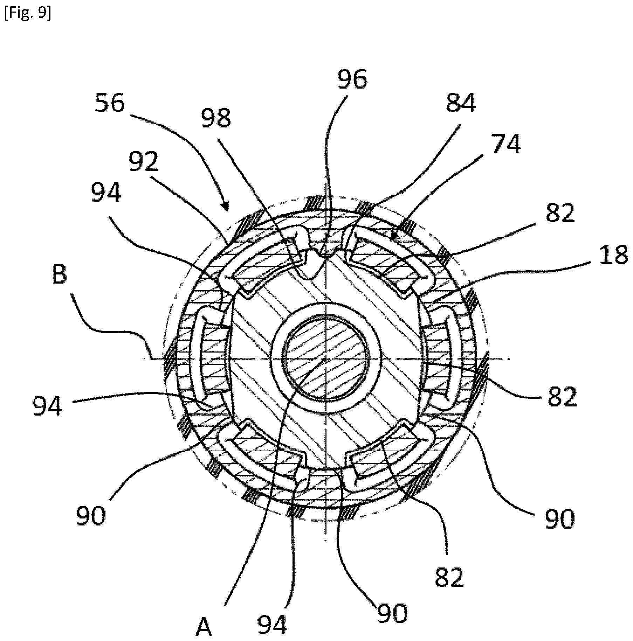

Comme on peut le voir à la figure 9, les premiers logements 82 présentent une symétrie orthogonale de conception suivant un plan B transversal de symétrie.

Aussi, les parois qui délimitent les premiers logements 82 présentent des angles de dépouille qui sont adaptés pour favoriser la sortie d'un moule (non représenté) conçu en deux demi-parties opposées selon l'axe vertical V en référence au trièdre de la figure 9.

Selon cette deuxième variante de réalisation, les premiers logements 82 voisins sont séparés par une cloison 90 qui augmente la résistance mécanique du noyau 18 par rapport à un logement unique en gorge annulaire du type précédemment décrit, à profondeur de logement égale.

Toujours selon le premier mode de réalisation de l'invention, en référence aux figures 5 et 9, la bague interne 52 de la première entretoise 20 forme une couronne 92 qui s'étend autour de l'axe A central du noyau 18, depuis le tronçon d'embase 78 de chaque doigt de verrouillage 74.

La couronne 92 coiffe chaque doigt de verrouillage 74 et est interposée radialement entre chaque doigt de verrouillage 74 et l'élément filtrant 56 de la première entretoise 20.

Comme on peut le voir à la figure 6, la couronne 92 permet le dégagement radial de chaque doigt de verrouillage 74 dans leur position escamotée.

Aussi, comme on peut le voir à la figure 9, la couronne 92 forme six jambes 94 qui s'étendent radialement et qui sont interposées angulairement chacune entre un doigt de verrouillage 74 adjacents de la première entretoise 20.

Chaque jambe 94 est en appui radial sur la face périphérique 84 du noyau 18 pour soutenir la couronne 92, lorsque la première entretoise 20 occupe sa position finale.

Toujours selon la figure 9, on notera que la face périphérique 84 du noyau 18 délimite une rainure 96 axiale longitudinale (visible à la figure 2) et la bague interne 52 de la première entretoise 20 comporte une nervure 98 qui coopère par complémentarité de forme avec la rainure 96 pour former un moyen de détrompage et pour bloquer la rotation autour de l'axe A central entre la première entretoise 20 et le noyau 18.

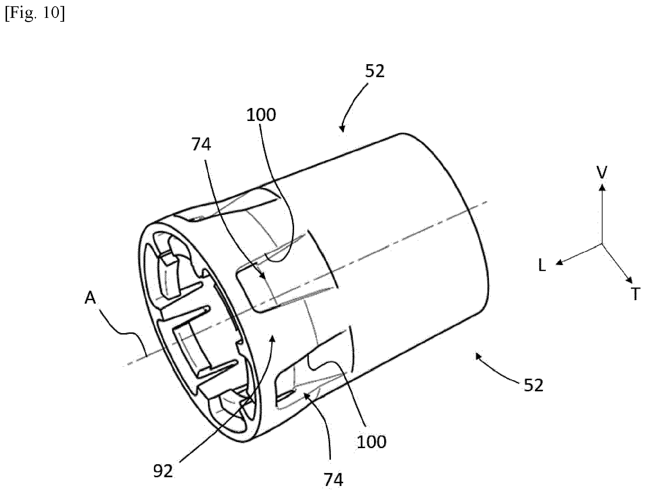

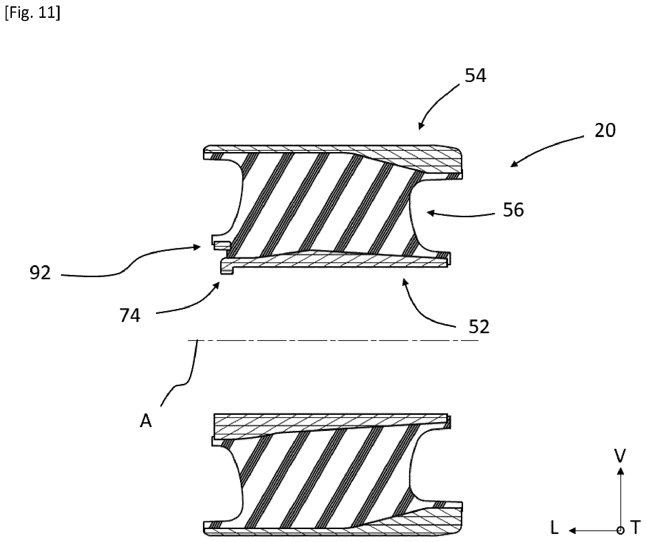

Selon une troisième variante de réalisation du dispositif 14 selon l'invention, illustrée aux figures 10 et 11, toujours selon le premier mode de réalisation de l'invention, la couronne 92 de la première entretoise 20 délimite six lumières 100 qui sont agencées chacune en regard d'un doigt de verrouillage 74, et l'élément filtrant 56 de la première entretoise 20 passe à travers chaque lumière 100 pour relier chaque doigt de verrouillage 74.

Selon cette troisième variante, chaque doigt de verrouillage 74 adhère à l'élément filtrant 56, ce qui favorise la tenue mécanique des doigts de verrouillage 74 et ce qui permet aux doigts de verrouillages de rester solidaires de la première entretoise 20 en cas de rupture.

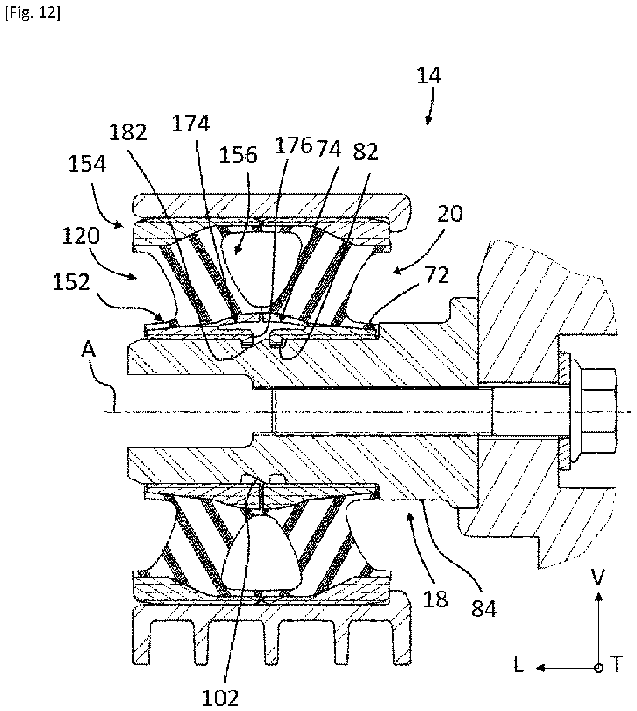

Selon un second mode de réalisation de l'invention illustré aux figures 12 à 16, le dispositif 14 de filtration comporte une seconde entretoise 120.

La seconde entretoise 120 est identique à la première entretoise 20, la seconde entretoise 120 ne sera donc pas décrite en détail.

Cependant, on notera que la seconde entretoise 120 comprend une bague interne 152, une bague externe 154 et un élément filtrant 156 qui est interposé radialement entre la bague interne 152 et la bague externe 154 pour filtrer les vibrations.

La bague interne 152 de la seconde entretoise 120 comporte une pluralité de doigts de verrouillage 174 formant crochet qui présentent chacun un ergot 176.

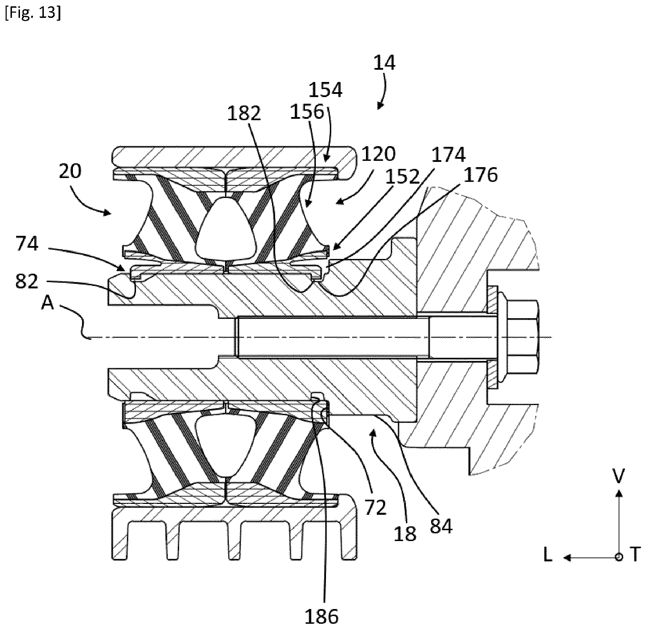

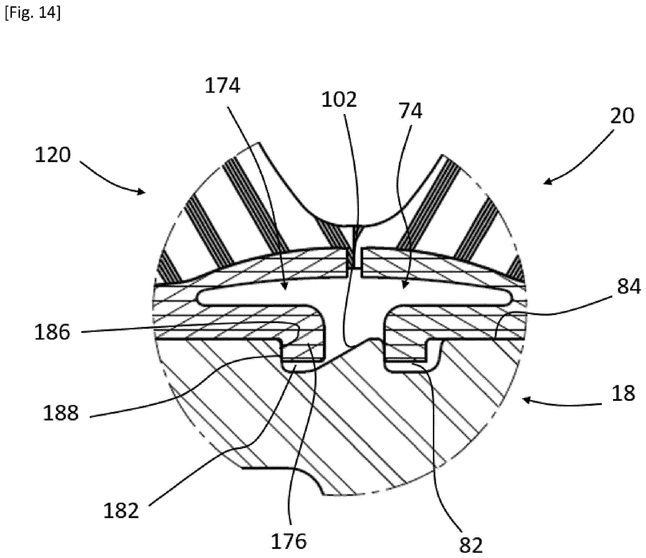

Le second mode de réalisation de l'invention comprend une première variante de réalisation illustrée aux figures 12 et 14, dans laquelle la première entretoise 20 et la seconde entretoise 120 sont agencées axialement face à face, et une seconde variante de réalisation illustrée aux figures 13, 15 et 16, dans laquelle la première entretoise 20 et la seconde entretoise 120 sont agencées de façon opposée, dos à dos.

Plus particulièrement, selon la première variante de réalisation illustrée à la figure 12, la première entretoise 20 est en butée axiale sur l'épaulement 72 formé par le noyau 18, et la seconde entretoise 120 est agencée en arrière de la première entretoise 20.

Comme on peut le voir en détail aux figures 12 et 14, le premier logement 82 délimité par la face périphérique 84 du noyau 18 est décalé axialement vers le centre du noyau 18 par rapport au premier mode de réalisation de l'invention, et la face périphérique 84 du noyau 18 délimite un second logement 182 qui est adjacent au premier logement 82.

Le premier logement 82 forme une rampe 102 oblique annulaire autour de l'axe A central, qui présente une pente montante d'arrière en avant pour écarter élastiquement chaque doigt de verrouillage 74 de la première entretoise 20 à leur passage, au cours du coulissement de la première entretoise 20 sur le noyau 18 vers sa position finale d'utilisation illustrée à la figure 12.

De plus, comme on peut le voir à la figure 14, le second logement 182 formé par le noyau 18 délimite une face de verrouillage 186 qui s'étend globalement radialement et l'ergot 176 de chaque doigt de verrouillage 174 de la seconde entretoise 120 délimite une face d'appui 188 qui s'étend globalement radialement et qui est conçue pour être en appui axial sur la face de verrouillage 186 du second logement 182 associé.

On notera que chaque doigt de verrouillage 74 de la première entretoise 20 s'oppose au coulissement axial de l'entretoise 20 vers l'arrière en travaillant en compression et que chaque doigt de verrouillage 174 de la seconde entretoise 120 s'oppose au coulissement axial de la seconde entretoise 120 vers l'arrière en travaillant en traction.

A l'inverse, selon la seconde variante de réalisation illustrée aux figures 13, 15 et 16, la seconde entretoise 120 est agencée en avant de la première entretoise 20.

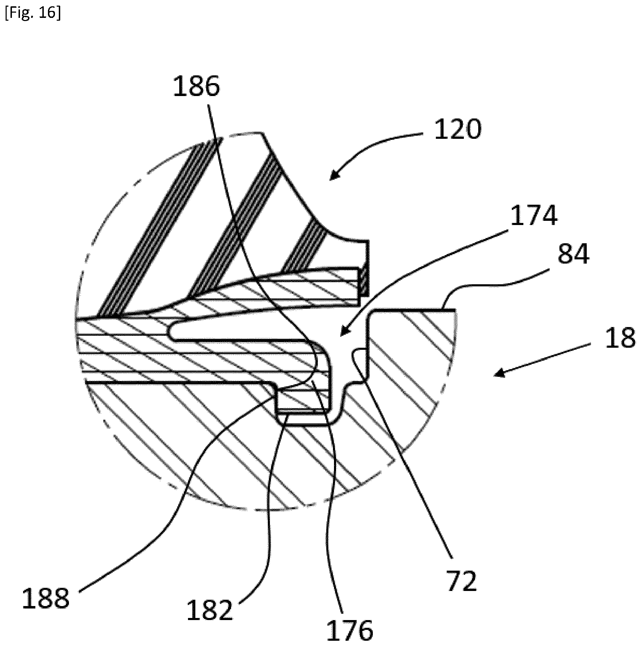

Selon cette seconde variante, en référence à la figure 16, le second logement 182 délimité par la face périphérique 84 du noyau 18 est agencé au voisinage de l'épaulement 72 pour coopérer avec les doigts de verrouillage 174 de la seconde entretoise 120.

Aussi, le second logement 182 délimite une face de verrouillage 186 qui s'étend globalement radialement et l'ergot 176 de chaque doigt de verrouillage 174 de la seconde entretoise 120 délimite une face d'appui 188 qui s'étend globalement radialement et qui est conçue pour être en appui axial sur la face de verrouillage 186 du second logement 182 associé.

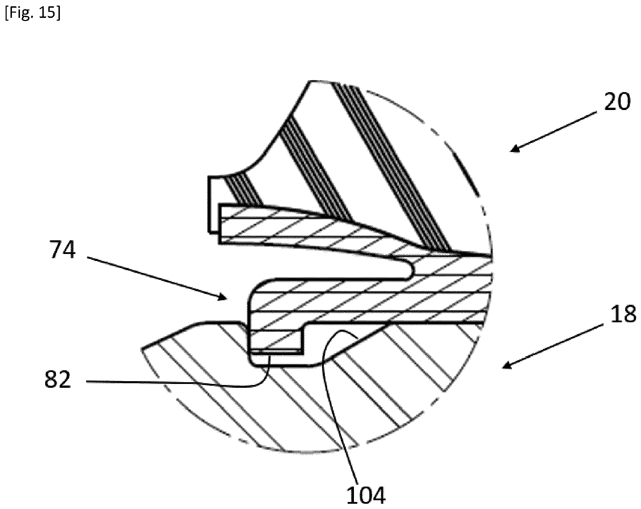

Enfin, toujours selon la seconde variante de réalisation, en référence à la figure 15, le premier logement 82 forme une rampe 104 oblique annulaire autour de l'axe A central, qui présente une pente montante d'arrière en avant pour écarter élastiquement chaque doigt de verrouillage 174 de la seconde entretoise 120 à leur passage, au cours du coulissement de la seconde entretoise 120 sur le noyau 18 vers sa position finale d'utilisation illustrée à la figure 13.

La présente invention propose un dispositif de filtration qui offre l'avantage de présenter une masse réduite et un coût limité en s'affranchissant d'un élément rapporté pour bloquer axialement l'entretoise sur le noyau, comme un anneau élastique.

De plus, le dispositif selon l'invention permet de se passer d'une étape de fabrication comme un sertissage, un collage ou un soudage de l'entretoise sur le noyau.

Aussi, le matériau utilisé pour la fabrication du noyau n'a pas besoin de présenter des propriétés mécaniques particulières comme celles nécessaires à un sertissage par déformation plastique par exemple.

La présente description de l'invention est donnée à titre d'exemple non limitatif. L'invention n'est limitée que par l'objet des revendications annexées.

On comprendra que les différentes variantes de réalisations décrites pour le premier mode de réalisation de l'invention s'appliquent également au second mode de réalisation de l'invention.

De même, les différentes variantes de réalisation peuvent se combiner entre elles.

Diverses variantes sont donc possibles dans le cadre des revendications annexées.

## Revendications

1. Dispositif (14) pour la filtration de vibrations et pour le support d'un moteur (10) d'un véhicule automobile, qui est prévu pour être interposé entre ledit moteur (10) et un châssis du véhicule automobile, et qui comporte au moins :
- un palier (16) qui est adapté pour fixer le dispositif (14) sur le châssis du véhicule automobile,
- un noyau (18) qui s'étend suivant un axe (A) central et qui est délimité par une face périphérique (84), le noyau (18) étant adapté pour relier le dispositif (14) sur le moteur (10), et
- une première entretoise (20) filtrante qui est interposée entre le palier (16) et le noyau (18) et qui est montée coulissante d'arrière en avant sur le noyau (18) suivant l'axe (A) principal, entre une position initiale démontée et une position finale d'utilisation dans laquelle la première entretoise (20) est verrouillée sur le noyau (18),
**caractérisé en ce que** la face périphérique (84) du noyau (18) délimite au moins un premier logement (82) **et en ce que** la première entretoise (20) comporte au moins une bague interne (52) équipée d'au moins un doigt de verrouillage (74) qui présente un ergot (76) et qui est déformable élastiquement suivant une direction radiale, entre une position escamotée dans laquelle le doigt de verrouillage (74) est dégagé du premier logement (82) associé pour permettre le coulissement axial de la première entretoise (20) sur le noyau (18), suivant l'axe (A) central, et une position de verrouillage dans laquelle ledit ergot (76) du doigt de verrouillage (74) coopère avec ledit premier logement (82) associé pour verrouiller axialement la première entretoise (20) sur le noyau (18).

2. Dispositif (14) selon la revendication 1, **caractérisé en ce que** le premier logement (82) délimite une face de verrouillage (86) qui s'étend globalement radialement, **et en ce que** le doigt de verrouillage (74) de la bague interne (52) de la première entretoise (20) s'étend axialement d'avant en arrière depuis un tronçon d'embase (78) relié sur la bague interne (52), jusqu'à un tronçon d'extrémité libre (80) qui forme l'ergot (76) et qui est conçu pour être en appui axial sur la face de verrouillage (86) du premier logement (82), lorsque le doigt de verrouillage (74) occupe sa position de verrouillage, pour verrouiller axialement la première entretoise (20) sur le noyau (18), de sorte que le doigt de verrouillage (74) travaille en compression axiale.

3. Dispositif (14) selon l'une quelconque des revendications précédentes, **caractérisé en ce que** la première entretoise (20) filtrante comporte un élément filtrant (56) qui est interposé radialement entre la bague interne (52) et le palier (16), pour filtrer les vibrations.

4. Dispositif (14) selon l'une quelconque des revendications précédentes, **caractérisé en ce que** la bague interne (52) forme une couronne (92) qui coiffe le doigt de verrouillage (74) et qui est interposée radialement entre le doigt de verrouillage (74) et l'élément filtrant (56) de la première entretoise (20).

5. Dispositif (14) selon la revendication 4, **caractérisé en ce que** la couronne (92) délimite au moins une lumière (100) qui est agencée en regard du doigt de verrouillage (74), **et en ce que** l'élément filtrant (56) de la première entretoise (20) est relié sur le doigt de verrouillage (74) à travers ladite lumière (100).

6. Dispositif (14) selon l'une quelconque des revendications précédentes, **caractérisé en ce que** la bague interne (52) comporte une pluralité de doigts de verrouillage (74) qui sont répartis angulairement autour de l'axe (A) central.

7. Dispositif (14) selon la revendication 6, **caractérisé en ce que** le noyau (18) comporte une pluralité de premiers logements (82) qui sont répartis angulairement autour de l'axe (A) central, **et en ce que** les doigts de verrouillage (74) coopèrent chacun avec un desdits premiers logements (82).

8. Dispositif (14) selon l'une quelconque des revendications précédentes, **caractérisé en ce que** le dispositif (14) comporte une seconde entretoise (120) filtrante, la seconde entretoise (120) comporte au moins une bague interne (152) équipée d'au moins un doigt de verrouillage (174) qui présente un ergot (176) et qui est déformable élastiquement suivant une direction radiale, entre une position escamotée dans laquelle ledit doigt de verrouillage (174) est dégagé d'un second logement (182) associé ménagé dans le noyau (18) pour permettre le coulissement axial de la seconde entretoise (120) sur le noyau (18), suivant l'axe (A) central, et une position de verrouillage dans laquelle ledit ergot (176) du doigt de verrouillage (174) de la seconde entretoise (120) coopère avec ledit second logement (182) pour verrouiller axialement la seconde entretoise (120) sur le noyau (18).

9. Dispositif (14) selon la revendication 8, **caractérisé en ce que** le logement (82, 182) le plus en amont desdits logements (82, 182), suivant le sens de coulissement axial d'arrière en avant desdites entretoises (20, 120), forme une rampe (102, 104) oblique annulaire autour de l'axe (A) central, qui présente une pente adaptée pour écarter élastiquement lesdits doigts de verrouillage (74, 174) à leur passage, au cours du coulissement de la première entretoise (20) ou de la seconde entretoise (120) sur le noyau (18) vers sa position finale d'utilisation.

10. Véhicule équipé d'au moins un dispositif (14) filtrant selon l'une quelconque des revendications précédentes.

## Patentansprüche

1. Vorrichtung (14) zur Filterung von Vibrationen und zum Tragen eines Motors (10) eines Kraftfahrzeugs, die dafür vorgesehen ist, zwischen dem Motor (10) und einem Rahmen des Kraftfahrzeugs angeordnet zu sein, und die wenigstens Folgendes aufweist:
- ein Lager (16), das geeignet ist, die Vorrichtung (14) auf dem Rahmen des Kraftfahrzeugs zu befestigen,
- einen Kern (18), der sich entlang einer Mittelachse (A) erstreckt und der von einer Umfangsfläche (84) begrenzt ist, wobei der Kern (18) geeignet ist, die Vorrichtung (14) an dem Motor (10) anzubringen, und
- einen ersten Filtrierabstandshalter (20), der zwischen dem Lager (16) und dem Kern (18) angeordnet ist und der von hinten nach vorne auf dem Kern (18) entlang der Hauptachse (A) zwischen einer abmontierten Ausgangsposition und einer endgültigen Gebrauchsposition gleitend gelagert ist, in welcher der erste Abstandshalter (20) auf dem Kern (18) verriegelt ist,
**dadurch gekennzeichnet, dass** die Umfangsfläche (84) des Kerns (18) wenigstens eine erste Aufnahme (82) begrenzt, und dadurch, dass der erste Abstandshalter (20) wenigstens einen Innenring (52) aufweist, der mit wenigstens einem ersten Verriegelungsfinger (74) ausgestattet ist, der eine Nase (76) aufweist und der in einer Radialrichtung zwischen einer eingezogenen Position, in welcher der Verriegelungsfinger (74) aus der zugehörigen ersten Aufnahme (82) gelöst ist, um das axiale Gleiten des ersten Abstandshalters (20) auf dem Kern (18) entlang der Mittelachse (A) zu ermöglichen, und einer Verriegelungsposition, in welcher die Nase (76) des Verriegelungsfingers (74) mit der zugehörigen ersten Aufnahme (82) zusammenwirkt, um den ersten Abstandshalter (20) auf dem Kern (18) axial zu verriegeln, elastisch verformbar ist.

2. Vorrichtung (14) nach Anspruch 1, **dadurch gekennzeichnet, dass** die erste Aufnahme (82) eine Verriegelungsfläche (86) begrenzt, die sich insgesamt radial erstreckt, und dadurch, dass sich der Verriegelungsfinger (74) des Innenrings (52) des ersten Abstandshalters (20) axial von vorne nach hinten von einem Sockelabschnitt (78), der an dem Innenring (52) angebracht ist, bis zu einem freien Endabschnitt (80) erstreckt, der eine Nase (76) bildet und der dafür ausgelegt ist, axial an der Verriegelungsfläche (86) der ersten Aufnahme (82) anzuliegen, wenn der Verriegelungsfinger (74) seine Verriegelungsposition einnimmt, um den ersten Abstandshalter (20) auf dem Kern (18) zu verriegeln, so dass der Verriegelungsfinger (74) mit axialem Druck wirkt.

3. Vorrichtung (14) nach einem der vorhergehenden Ansprüche, **dadurch gekennzeichnet, dass** der erste Filtrierabstandshalter (20) ein Filtrierelement (56) aufweist, das radial zwischen dem Innenring (52) und dem Lager (16) angeordnet ist, um die Vibrationen herauszufiltern.

4. Vorrichtung (14) nach einem der vorhergehenden Ansprüche, **dadurch gekennzeichnet, dass** der Innenring (52) eine Krone (92) bildet, die auf dem Verriegelungsfinger (74) sitzt und die radial zwischen dem Verriegelungsfinger (74) und dem Filtrierelement (56) des ersten Abstandshalters (20) angeordnet ist.

5. Vorrichtung (14) nach Anspruch 4, **dadurch gekennzeichnet, dass** die Krone (92) wenigstens eine Öffnung (100) begrenzt, die gegenüber dem Verriegelungsfinger (74) angeordnet ist, und dadurch, dass das Filtrierelement (56) des ersten Abstandshalters (20) durch diese Öffnung (100) an dem Verriegelungsfinger (74) angebracht ist.

6. Vorrichtung (14) nach einem der vorhergehenden Ansprüche, **dadurch gekennzeichnet, dass** der Innenring (52) eine Mehrzahl von Verriegelungsfingern (74) aufweist, die um die Mittelachse (A) winkelmäßig verteilt sind.

7. Vorrichtung (14) nach Anspruch 6, **dadurch gekennzeichnet, dass** der Kern (18) eine Mehrzahl von ersten Aufnahmen (82) aufweist, die um die Mittelachse (A) winkelmäßig verteilt sind, und dadurch, dass die Verriegelungsfinger (74) jeweils mit einem der ersten Aufnahmen (82) zusammenwirken.

8. Vorrichtung (14) nach einem der vorhergehenden Ansprüche, **dadurch gekennzeichnet, dass** die Vorrichtung (14) einen zweiten Filtrierabstandshalter (120) aufweist, der zweite Abstandshalter (120) wenigstens einen Innenring (152) aufweist, der mit wenigstens einem Verriegelungsfinger (174) ausgestattet ist, der eine Nase (176) aufweist und der in einer Radialrichtung zwischen einer eingezogenen Position, in welcher der Verriegelungsfinger (174) aus einer zugehörigen zweiten Aufnahme (182) gelöst ist, die im Kern (18) vorgesehen ist, um das axiale Gleiten des zweiten Abstandshalters (120) auf dem Kern (18) entlang der Mittelachse (A) zu ermöglichen, und einer Verriegelungsposition, in welcher die Nase (176) des Verriegelungsfingers (174) des zweiten Abstandshalters (120) mit der zweiten Aufnahme (182) zusammenwirkt, um den zweiten Abstandshalter (120) axial auf dem Kern (18) zu verriegeln, elastisch verformbar ist.

9. Vorrichtung (14) nach Anspruch 8, **dadurch gekennzeichnet, dass** die Aufnahme (82, 182), die sich in der Richtung des axialen Gleitens der Abstandshalter (20, 120) von hinten nach vorne am weitesten stromauf der Aufnahmen (82, 182) befindet, eine ringförmige schräge Rampe (102, 104) um die Mittelachse (A) bildet, die eine Schräge aufweist, die geeignet ist, die Verriegelungsfinger (74, 174) auf ihrem Weg während des Gleitens des ersten Abstandshalters (20) oder des zweiten Abstandshalters (120) auf dem Kern (18) zu seiner endgültigen Gebrauchsposition elastisch zu spreizen.

10. Fahrzeug, das mit wenigstens einer Filtriervorrichtung (14) nach einem der vorhergehenden Ansprüche ausgestattet ist.

## Claims

1. Device (14) for filtering vibrations and for supporting a motor (10) of a motor vehicle, which device is intended to be interposed between said motor (10) and a chassis of the motor vehicle, and which device comprises at least:
- a bearing (16) which is designed to fix the device (14) to the chassis of the motor vehicle,
- an insert (18) which extends along a central axis (A) and is delimited by a peripheral face (84), the insert (18) being designed to connect the device (14) to the motor (10), and
- a first filtering spacer (20) which is interposed between the bearing (16) and the insert (18) and is mounted slidingly from rear to front on the insert (18) along the main axis (A), between a dismounted initial position and a final position of use in which the first spacer (20) is locked on the insert (18),
**characterized in that** the peripheral face (84) of the insert (18) delimits at least one first recess (82) **and in that** the first spacer (20) has at least one inner bushing (52) equipped with at least one locking finger (74) which has a lug (76) and is elastically deformable along a radial direction, between a retracted position in which the locking finger (74) is disengaged from the associated first recess (82) to enable the axial sliding of the first spacer (20) on the insert (18), along the central axis (A), and a locking position in which said lug (76) of the locking finger (74) engages with said associated first recess (82) to axially lock the first spacer (20) on the insert (18).

2. Device (14) according to Claim 1, **characterized in that** the first recess (82) delimits a locking face (86) which extends in a radial overall direction, **and in that** the locking finger (74) of the inner bushing (52) of the first spacer (20) extends axially from front to rear from a base section (78), connected to the inner bushing (52), to a free-end section (80) which forms the lug (76) and is designed to bear axially against the locking face (86) of the first recess (82), when the locking finger (74) is in its locking position, to axially lock the first spacer (20) on the insert (18), such that the locking finger (74) is loaded in axial compression.

3. Device (14) according to either one of the preceding claims, **characterized in that** the first filtering spacer (20) has a filtering element (56) which is interposed radially between the inner bushing (52) and the bearing (16), for filtering vibrations.

4. Device (14) according to any one of the preceding claims, **characterized in that** the inner bushing (52) forms a ring (92) which caps the locking finger (74) and is interposed radially between the locking finger (74) and the filtering element (56) of the first spacer (20).

5. Device (14) according to Claim 4, **characterized in that** the ring (92) delimits at least one aperture (100) which is arranged facing the locking finger (74), **and in that** the filtering element (56) of the first spacer (20) is connected to the locking finger (74) through said aperture (100).

6. Device (14) according to any one of the preceding claims, **characterized in that** the inner bushing (52) has a plurality of locking fingers (74) which are distributed angularly around the central axis (A).

7. Device (14) according to Claim 6, **characterized in that** the insert (18) comprises a plurality of first recesses (82) which are distributed angularly around the central axis (A), **and in that** the locking fingers (74) each engage with one of said first recesses (82).

8. Device (14) according to any one of the preceding claims, **characterized in that** the device (14) comprises a second filtering spacer (120), the second spacer (120) has at least one inner bushing (152) equipped with at least one locking finger (174) which has a lug (176) and is elastically deformable along a radial direction, between a retracted position in which said locking finger (174) is disengaged from an associated second recess (182) formed in the insert (18) to enable the axial sliding of the second spacer (120) on the insert (18), along the central axis (A), and a locking position in which said lug (176) of the locking finger (174) of the second spacer (120) engages with said second recess (182) to axially lock the second spacer (120) on the insert (18).

9. Device (14) according to Claim 8, **characterized in that** the furthest-upstream recess (82, 182) of said recesses (82, 182) along the direction of axial sliding from rear to front of said spacers (20, 120), forms an annular oblique ramp (102, 104) around the central axis (A), which has a slope designed to elastically move said locking fingers (74, 174) apart as they pass, while the first spacer (20) or the second spacer (120) is sliding on the insert (18) towards its final position of use.

10. Vehicle equipped with at least one filtering device (14) according to any one of the preceding claims.
